# EUROPÄISCHE PATENTSCHRIFT

(11) **EP 2 273 157 B1**
(45) Veröffentlichungstag und Bekanntmachung des Hinweises auf die Patenterteilung: **05.04.2017**
(21) Anmeldenummer: 10165032.3
(22) Anmeldetag: 07.06.2010
(51) Int. Cl.: F16H 61/12, B60W 50/02, F16H 61/688, B60W 10/06, B60W 10/113

(54) **Antriebsstrang-Überwachungsverfahren**
Power transmission monitoring method
Procédé de surveillance de faisceau d'entraînement

(30) Priorität: 06.07.2009 DE 102009032220
(43) Veröffentlichungstag der Anmeldung: 12.01.2011
(73) Patentinhaber: GETRAG B.V. & Co. KG, 74199 Untergruppenbach (DE)
(72) Erfinder: Seufert, Martin, 71711, Steinheim (DE); Kalisch, Tobias, 78050, Villingen-Schwenningen (DE); Goldbach, Markus, 74074, Heilbronn (DE); Schachtmann, Michael, 78136, Schonach (DE); Hettich, Ralf, 70794, Filderstadt (DE); Neundorf, Matthias, 78050, Villingen (DE)
(74) Vertreter: Witte, Weller & Partner Patentanwälte mbB

(56) Entgegenhaltungen:
- EP-A2- 1 621 797
- EP-A2- 1 925 521
- DE-A1- 10 311 885
- DE-A1- 10 318 518
- DE-A1-102006 016 710
- US-A1- 2006 156 715

## Beschreibung

Die vorliegende Erfindung betrifft ein Verfahren zum Überwachen eines automatisierten Antriebsstranges eines Kraftfahrzeuges, insbesondere eines Personenkraftfahrzeuges mit den Merkmalen des Oberbegriffs des Anspruchs 1, wie 25 aus dem Dokument US 2006/0156715 A1 bekannt gewarden ist, wobei der Antriebsstrang einen Antriebsmotor, eine Reibkupplungsanordnung und ein Stufengetriebe aufweist, wobei die Reibkupplungsanordnung den Antriebsmotor mit dem Stufengetriebe verbindet oder hiervon trennt.

Derartige automatisierte Antriebsstränge sind in Form von automatisierten Schaltgetrieben (ASG) und Doppelkupplungsgetrieben (DKG) allgemein bekannt. In solchen automatisierten Antriebssträngen erfolgt häufig eine Überwachung von Betriebsparametern, um festzustellen, ob im Betrieb eine materialgefährdende oder sogar eine sicherheitsgefährdende Situation auftritt.

Beispielsweise ist es aus dem Dokument DE 10 2007 030 707 A1 bekannt, in einem Wandlerautomatikgetriebe oder einem Doppelkupplungsgetriebe eine Überdrehzahlbedingung zu verhindern. Dabei wird die Drehzahl des Antriebsmotors überwacht. Ein erster Schwellenwert wird in Abhängigkeit von einer Betriebsbedingung eingestellt. Wenn die Motordrehzahl und/oder die Getriebeantriebswellendrehzahl den ersten Schwellenwert übersteigt, wird aktiv in die Motorsteuerung eingegriffen, um dessen Motordrehmoment zu reduzieren.

Aus dem Dokument DE 10 2007 027 134 A1 ist es bekannt, eine solche Drehmomentreduktion entweder hart oder weich durchzuführen, in Abhängigkeit davon, ob eine erste Drehzahlschwelle oder eine zweite Drehzahlschwelle überschritten wird.

Das Dokument DE 103 18 518 A1 offenbart ein Gangüberwachungs optiwierungs verfahren, bei dem bei Überschreiten von Drehzahe schwellen nach einer Filterzeit auf eine Fehlfunktion geschlossen wird.

Vor diesem Hintergrund ist es eine Aufgabe der Erfindung, ein verbessertes Überwachungsverfahren für einen automatisierten Antriebsstrang und einen Antriebsstrang als solchen anzugeben.

Die obige Aufgabe wird zum einen gelöst durch ein Verfahren gemäß Anspruch 1 zum Überwachen eines automatisierten Antriebsstranges eines Personenkraftfahrzeuges, der einen Antriebsmotor, eine Reibkupplungsanordnung und ein Stufengetriebe aufweist, wobei die Reibkupplungsanordnung den Antriebsmotor mit dem Stufengetriebe verbindet oder hiervon trennt, mit den Schritten:
- Erfassen wenigsten eines Drehzahlparameters des Antriebsstranges;
- Überprüfen, ob der Drehzahlparameter für eine erste vorbestimmte Zeitspanne größer ist als ein erster Schwellenwert; und
- Einleiten einer Maßnahme in dem Antriebsstrang, um den Drehzahlparameter abzusenken, wenn der Drehzahlparameter für die erste vorbestimmte Zeitspanne größer ist als der erste Schwellenwert.

Ferner wird die obige Aufgabe gelöst gemäß Anspruch 13 durch einen Antriebsstrang eines Kraftfahrzeuges, insbesondere eines Personenkraftfahrzeuges, der einen Antriebsmotor, wenigstens eine Reibkupplungsanordnung, ein Stufengetriebe und eine Steuereinrichtung zur Steuerung des Antriebsstranges aufweist, wobei die Reibkupplungsanordnung den Antriebsmotor mit dem Stufengetriebe verbindet oder hiervon trennt und wobei in der Steuereinrichtung ein derartiges Verfahren implementiert ist.

In automatisierten Antriebssträngen von Kraftfahrzeugen können Drehzahlen auftreten, die Matezialschäden am Antriebsmotor, an der Reibkupplungsanordnung und/oder am Stufengetriebe zur Folgen haben können. Ferner können überhöhte Drehzahlen auch zu sicherheitskritischen Zuständen führen, insbesondere dann, wenn die Gefahr besteht, dass ein solcher Materialschaden zu einer Blockade des Antriebsstranges und damit zu einem Verlust an Haftung der angetriebenen Räder führt.

Durch die erfindungsgemäße Maßnahme, einen Drehzahlparameter des Antriebsstranges nicht nur auf das Überschreiten eines Schwellenwertes hin zu überwachen, sondern darauf, ob der Drehzahlparameter für eine erste vorbestimmte Zeitspanne größer ist als ein erster Schwellenwert, können unnötige Fehlerbeseitigungsmaßnahmen vermieden werden. Denn derartige Fehlerbeseitigungsmaßnahmen haben in der Regel den Nachteil, dass sie zu Einschränkungen des Fahrzeugkomforts führen können.

Die erste vorbestimmte Zeitspanne ist dabei so bemessen, dass ein kurzzeitiges Überschreiten des ersten Schwellenwertes für eine Zeitspanne kleiner als die erste vorbestimmte Zeitspanne unkritisch ist. Falls durch transiente Bedingungen der Drehzahlparameter den ersten Schwellenwert somit nur kurzzeitig überschreitet, wird keine Fehlerbeseitigungsmaßnahme eingeleitet.

Falls der Drehzahlparameter hingegen für die erste vorbestimmte Zeitspanne oder länger überschritten wird, können mittels des erfindungsgemäßen Verfahrens entsprechende Maßnahmen zur Absenkung des Drehzahlparameters eingeleitet werden.

Demzufolge wird ein guter Kompromiss zwischen hoher Sicherheit und hohem Komfort bei der automatisierten Betätigung des Antriebsstranges erzielt.

Der Drehzahlparameter kann eine Drehzahl sein oder ein Gradient hiervon, wobei unter einem Gradienten eine erste oder zweite Ableitung der Drehzahl verstanden wird. Ferner kann die Erfassung der Drehzahl entweder ummittelbar mittels eines entsprechenden Drehzahlsensors erfolgen. Es ist alternativ auch möglich, die Drehzahl mittelbar zu errechnen, indem beispielsweise eine andere Drehzahl oder ein anderer Parameter gemessen wird und von diesem durch mathematische Methoden auf die Drehzahl rückgeschlossen wird (beispielsweise kann zur Messung einer Eingangsdrehzahl eines Getriebes die Drehzahl der angetriebenen Räder herangezogen werden, um hieraus die Getriebeeingangswellendrehzahl über die Übersetzung in dem Stufengetriebe und ggf. eine Übersetzung in einem Achsgetriebe zu errechnen).

Ferner ist der automatisierte Antriebsstrang ein DKG sein.

Die Aufgabe wird somit vollkommen gelöst.

Gemäß einer besonders bevorzugten Ausführungsform ist der Drehzahlparameter eine Motordrehzahl des Antriebsmotors oder ein Gradient hiervon.

Bei dieser Ausführungsform wird überwacht, ob die Motordrehzahl über die erste vorbestimmte Zeitspanne größer ist als ein erster Schwellenwert.

Eine zu hohe Motordrehzahl kann beispielsweise bei einer falsch eingelegten Gangstufe auftreten, aber beispielsweise auch bei einer Bergabfahrt. In letzterem Fall ist es aufgrund des Schubbetriebes nicht möglich, die Motordrehzahl allein aufgrund einer in einer Motorsteuerung in der Regel ohnehin vorhandenen Drehzahlbegrenzungsroutine zu begrenzen. In diesem Fall kann es notwendig sein, durch weitergehende Maßnahmen in der Reibkupplungsanordnung und/oder dem Stufengetriebe für eine geeignete Motordrehzahlabsenkung zu sorgen.

Gemäß einer weiteren bevorzugten Ausführungsform ist der Drehzahlparameter eine Getriebeeingangsdrehzahl des Stufengetriebes oder ein Gradient hiervon.

Die Getriebeeingangsdrehzahl ist bei einer Reibkupplung in der Regel gleich der Drehzahl eines Ausgangsgliedes der Reibkupplungsanordnung. Falls diese zu hoch wird, kann dies zu einer Zerstörung der Reibkupplungsanordnung führen und ggf., bei Ablösung von Reibbelägen oder Ähnlichem, zu einer Blockade des Antriebsstranges.

Auch in diesem Fall kann es notwendig sein, entsprechende Maßnahmen in der Reibkupplungsanordnung selbst oder dem Stufengetriebe einzuleiten.

Gemäß einer weiteren bevorzugten Ausführungsform weist der Antriebsstrang eine Wellenanordnung aus einer Hohlwelle und einer konzentrisch darin gelagerten Innenwelle auf, wobei der Drehzahlparameter eine Differenzdrehzahl zwischen der Hohlwelle und der Innenwelle oder ein Gradient hiervon ist.

Eine derartige Wellenanordnung wird insbesondere bei Doppelkupplungsgetrieben verwendet, und zwar als Getriebeeingangswellenanordnung. Hierbei sind die Hohlwelle und die Innenwelle über Lager (beispielsweise Nadellager) gegeneinander gelagert. Eine zu hohe Differenzdrehzahl kann zu Lagerschäden führen und solche Lagerschäden können ggf. sogar zu einer Blockade der Hohlwelle und der Innenwelle führen und folglich zu einem Verlust der Haftung an den angetriebenen Rädern.

Sofern in den beiden Teilgetrieben eines Doppelkupplungsgetriebes jeweils eine Vorwärtsgangstufe eingelegt ist, ergibt sich die Differenzdrehzahl durch Subtraktion der Drehzahlen voneinander. Sofern jedoch in einem Teilgetriebe eine Rückwärtsgangstufe und in dem anderen Teilgetriebe eine Vorwärtsgangstufe eingelegt ist, kann sich die Differenzdrehzahl durch Addition der Drehzahlen ergeben. Dieser Fall ist bei Doppelkupplungsgetrieben von besonderer Bedeutung, da hierbei sehr hohe Differenzdrehzahlen auftreten können, die zu Lagerschäden führen können.

Die Überprüfung der Differenzdrehzahl zwischen der Hohlwelle und der Innenwelle bzw. eines Gradienten hiervon kann bevorzugterweise auch nur dann erfolgen, wenn eine Rückwärtsgangstufe eingelegt ist. Hierdurch kann die Auslastung der elektronischen Steuereinrichtung des Antriebsstranges optimiert werden.

Insgesamt ist es ferner bevorzugt, wenn wenigstens zwei unterschiedliche Drehzahlparameter des Antriebsstranges überprüft werden (ausgewählt vorzugsweise aus der Motordrehzahl, der Getriebeeingangsdrehzahl und der Differenzdrehzahl), wobei eine den jeweiligen Drehzahlparameter absenkende Maßnahme eingeleitet wird, wenn wenigstens einer der zwei Drehzahlparameter für einen jeweiligen ersten Zeitraum einen jeweiligen ersten Schwellenwert überschreitet.

Die einzelnen Drehzahlparameter können dabei unterschiedliche erste Schwellenwerte aufweisen, können jedoch auch identische Schwellenwerte aufweisen. Ferner kann der jeweilige erste Zeitraum für jeden Drehzahlparameter unterschiedlich eingestellt sein, kann jedoch auf für jeden Drehzahlparameter identisch sein.

Je nach dem, was für ein Drehzahlparameter für die jeweilige erste vorbestimmte Zeitspanne den jeweiligen ersten Schwellenwert überschreitet, können unterschiedliche Maßnahmen bzw. Kombinationen von Maßnahmen eingeleitet werden, um den jeweiligen Drehzahlparameter abzusenken.

Gemäß einer bevorzugten Ausführungsform beinhaltet die Maßnahme zur Absenkung des Drehzahlparameters, dass von dem Antriebsmotor abgegebene Drehmoment abzusenken.

Dies kann durch eine Verringerung der Kraftstoffzufuhr zu dem Motor erfolgen oder durch andere Maßnahmen.

Gemäß einer weiteren bevorzugten Ausführungsform beinhaltet die Maßnahme, eine Reibkupplung der Reibkupplungsanordnung zu öffnen.

Sofern, wie oben beschrieben, eine das Drehmoment reduzierende Maßnahme nicht notwendigerweise zu einem Absenken des Drehzahlparameters führt (wie bei einer Bergabfahrt), kann es eine bevorzugte Maßnahme sein, die leistungsübertragende Reibkupplung zu öffnen.

In diesem Fall kann die das Drehmoment des Antriebsmotors absenkende Maßnahme sofort greifen, um die Motordrehzahl zu verringern.

Gemäß einer weiteren bevorzugten Ausführungsform beinhaltet die Maßnahme, in dem Stufengetriebe eine andere Gangstufe einzulegen.

Hierdurch ist es möglich, Drehzahlen in dem Stufengetriebe zu verringern, insbesondere jene der Getriebeeingangswelle(n) bzw. der Differenzdrehzahl zwischen Hohlwelle und Innenwelle.

Bei einem Dopgelkupplungsgetriebe kann insbesondere in dem inaktiven Teilgetriebe, das keine Leistung überträgt, zur Verringerung der Drehzahl der zugeordneten Getriebeeingangswelle eine andere Gangstufe eingelegt werden, um deren Drehzahl abzusenken.

Ferner ist es vorteilhaft, wenn die Maßnahme beinhaltet, das Stufengetriebe auf neutral zu schalten.

In diesem Fall kann eine Fortpflanzung von Überdrehzahlen in dem Getriebe über eine geschaltete Schaltkupplung verhindert werden.

Erfindungsgemäß ist das Stufengetriebe ein Doppelkupplungsgetriebe mit einem ersten und einem zweiten Teilgetriebe, von denen eines aktiv und das andere inaktiv ist.

Wie bei Doppelkupplungsgetrieben üblich, kann dabei in dem inaktiven Teilgetriebe eine Gangstufe vorgewählt sein. Die Wahl dieser Gangstufe kann gegebenenfalls zu Überdrehzahlen beispielsweise an den Getriebeeingangswellen (Differenzdrehzahl) führen. Erfindungsgemäß ist vorgesehen, die Maßnahme in dem inaktiven Teilgetriebe durchzuführen, also beispielsweise dort eine andere Gangstufe einzulegen oder das inaktive Stufengetriebe auf neutral zu schalten.

Gemäß einer weiteren bevorzugten Ausführungsform beinhaltet die Maßnahme dabei, in dem aktiven Teilgetriebe eine Gangstufe auszulegen (auf neutral zu schalten), wobei das aktive Teilgetriebe vor diesem Schritt entlastet wird.

Da im aktiven Teilgetriebe in der Regel entweder ein Zug- und Schubbetrieb vorliegt, kann eine Entlastung des Teilgetriebes beispielsweise durch Erhöhen oder Reduzieren des Motormomentes erfolgen. Hierdurch kann das Öffnen der Schaltkupplung des eingelegten Ganges vorgenommen werden.

Ferner ist es vorteilhaft, wenn die Maßnahme beinhaltet, das Kraftfahrzeug abzubremsen.

Diese Maßnahme kann bei geschlossener Reibkupplungsanordnung zu einer Verringerung der Motordrehzahl führen, auch wenn dies zu einem hohen Verschleiß der Bremseinrichtung führt. Insbesondere dann, wenn die Reibkupplungsöffnung geöffnet ist oder zum Zwecke der Drehzahlüberhöhung geöffnet worden ist, kann diese Maßnahme zu einer sofortigen Verringerung auch von Drehzahlen im Stufengetriebe führen, insbesondere der Eingangswellendrehzahl(en).

Gemäß einer weiteren insgesamt bevorzugten Ausführungsform wird das Verfahren in einem ersten Prozess in einer elektronischen Steuereinrichtung durchgeführt, wobei in einem parallelen zweiten Prozess wenigstens ein Drehzahlparameter des Antriebsstranges überprüft wird, ob der Drehzahlparameter für eine zweite vorbestimmte Zeitspanne größer ist als ein zweiter Schwellenwert, der größer ist als der erste Schwellenwert, wobei dann, wenn dies der Fall ist, die Steuereinrichtung zurückgesetzt wird (reset), um einen sicherheitsunkritischen Zustand des Antriebsstranges hervorzurufen.

Diese Ausführungsform beinhaltet in der elektronischen Steuereinrichtung folglich zwei im Wesentlichen parallel ablaufende Prozesse, von denen der erste Prozess dazu dient, Fehlerzustände zu beseitigen, die sich durch geeignete Maßnahmen in aller Regel wieder beseitigen lassen. Der zweite Prozess ist hingegen ein sicherheitsrelevanter Prozess, der dann aktiv wird, wenn ein zweiter Schwellenwert für eine zweite vorbestimmte Zeitspanne überschritten wird, der größer ist als der erste Schwellenwert.

Die zweite vorbestimmte Zeitspanne kann gleich oder größer sein als die erste vorbestimmte Zeitspanne, ist jedoch vorzugsweise kürzer als die erste vorbestimmte Zeitspanne.

Der zweite Prozess wird in der Regel durch Software implementiert, die auf Fehlerfreiheit hin überprüft worden ist. Der zweite Prozess ist daher für die Beseitigung sicherheitskritischer Zustände geeignet. In der Regel dient der zweite Prozess als "Notfallprozess" für den Fall, dass der erste Prozess nicht zu einer hinreichenden Reduktion des betreffenden Drehzahlparameters geführt hat.

Der zweite Prozess kann dabei funktional ansonsten im Wesentlichen identisch ausgebildet sein zu dem ersten Prozess.

Unter einem Zurücksetzen der Steuereinrichtung kann vorliegend ein Vorgang verstanden werden, bei dem der Antriebsstrang wieder in einen sicherheitsunkritischen Zustand überführt wird. Ein solches Zurücksetzen (Reset) kann auch von anderen Prozessen der Steuereinrichtung ausgelöst werden.

Bei automatisierten Schaltgetrieben und Doppelkupplungsgetrieben führt ein solches Zurücksetzen in der Regel zu einem sofortigen Öffnen der Reibkupplungsanordnung (wobei die darin enthaltene Reibkupplung bzw. die darin enthaltenen Reibkupplungen in der Regel selbstöffnend (normally open) ausgeführt sind).

Bei dem Zurücksetzen wird nämlich in der Regel die Versorgungsspannung zum Versorgen der Aktuatoren zum Betätigen der Reibkupplungsanordnung unterbrochen, so dass der Aktuator oder die Aktuatoren sofort stromfrei werden.

Die oben beschriebenen Maßnahmen zum Absenken des Drehzahlparameters können einzeln oder in Kombination angewendet werden.

Ferner können auch folgende Maßnahmen einzeln oder in Kombination hiermit getroffen werden:
Das Stufengetriebe kann auch in eine Neutralposition geschaltet werden. Das betroffene Stufengetriebe kann auch in eine Neutralposition geschaltet werden und die zugeordnete Reibkupplung kann anschließend geschlossen werden.

Bei einem Doppelkupplungsgetriebe können beide Teilgetriebe in eine Neutralposition geschaltet werden. Dabei können zusätzlich eine oder beide Reibkupplungen der Reibkupplungsanordnung des Doppelkupplungsgetriebes geschlossen werden.

Das Einlegen einer anderen Gangstufe kann in einem oder in beiden Teilgetrieben des Doppelkupplungsgetriebes erfolgen.

Insgesamt können die Funktionen eine Beschädigung des Antriebsmotors, der Reibkupplungsanordnung und/oder des Stufengetriebes durch Überdrehzahlen verhindern. Sicherheitskritische Zustände, Material- und Personenschäden werden hierdurch verhindert. Das erfindungsgemäße Verfahren kann alleine durch Software implementiert werden. Hardwarelösungen zum Absenken des Drehzahlparameters sind folglich nicht notwendig, so dass die Kosten verringert werden. Dadurch, dass Beschädigungen an den Komponenten des Antriebsstranges vermieden werden, wird die Lebensdauer erhöht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer Ausführungsform eines erfindungsgemäßen Antriebsstranges;
- Fig. 2: eine schematische Darstellung des Verlaufes eines Drehzahlparameters über der Zeit; und
- Fig. 3: eine schematische Darstellung eines ersten und eines zweiten Prozesses, die in einer Steuereinrichtung zur Implementierung des erfindungsgemäßen Verfahrens eingerichtet sein können.

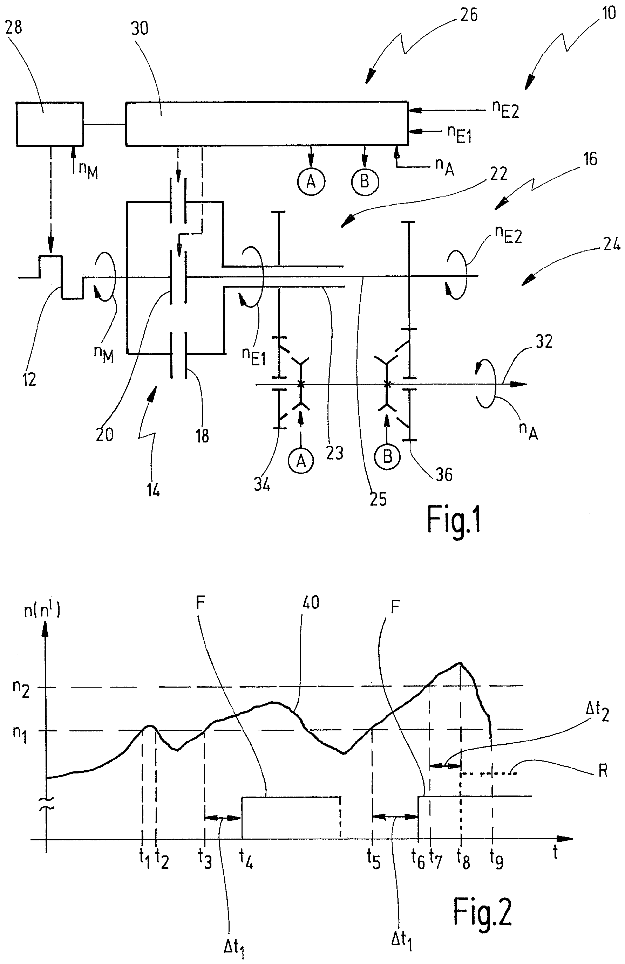

In Fig. 1 ist ein Antriebsstrang eines Kraftfahrzeuges, insbesondere eines Personenkraftfahrzeuges, generell mit 10 bezeichnet.

Der Antriebsstrang 10 weist einen Antriebsmotor 12 auf, der beispielsweise durch einen Verbrennungsmotor oder eine Hybridantriebseinheit ausgebildet sein kann.

Ferner weist der Antriebsstrang eine Reibkupplungsanordnung 14 und ein Stufengetriebe 16 auf. Die Reibkupplungsanordnung 14 verbindet den Antriebsmotor 12 mit dem Stufengetriebe 16 oder trennt das Stufengetriebe 16 von dem Antriebsmotor 12.

Vorliegend ist das Stufengetriebe 16 als Doppelkupplungsgetriebe ausgelegt. Entsprechend weist die Reibkupplungsanordnung 14 eine erste Reibkupplung 18 und eine zweite Reibkupplung 20 auf. Das Stufengetriebe 14 weist ein erstes Teilgetriebe 22 auf, das als Getriebeeingangswelle eine Hohlwelle 23 beinhaltet, die mit einem Ausgangsglied der ersten Reibkupplung 18 verbunden ist. Ferner beinhaltet das Stufengetriebe 16 ein zweites Teilgetriebe 24, dessen Getriebeeingangswelle als Innenwelle 25 ausgebildet ist, die konzentrisch innerhalb der Hohlwelle 23 gelagert ist. Die Innenwelle 25 ist mit einem Ausgangsglied der zweiten Reibkupplung 20 verbunden.

Der Antriebsstrang beinhaltet ferner eine Steuereinrichtung 26, die eine Motorsteuereinrichtung 28 beinhalten kann und eine Getriebesteuereinrichtung 30. Die Motorsteuereinrichtung 28 und die Getriebesteuereinrichtung 30 können durch eine einzelne Steuereinrichtung gebildet sein oder miteinander in Kommunikation stehen, wie es in Fig. 1 durch eine Verbindungslinie angedeutet ist.

Ein Getriebeausgang des Stufengetriebes 16 ist bei 32 gezeigt.

Dem ersten Teilgetriebe 22 sind beispielsweise die ungeraden Gangstufen zugeordnet (d.h. Gangstufen 1, 3, 5, etc.). Das zweite Teilgetriebe 24 kann in entsprechender Weise die geraden Gangstufen beinhalten (d.h. Gangstufen 2, 4, 6, etc.). Zur Darstellung der Gangstufen ist in Fig. 1 ein erster Radsatz 34 gezeigt, der dem ersten Teilgetriebe 22 zugeordnet ist. Ferner ist ein zweiter Radsatz 36 gezeigt, der dem zweiten Teilgetriebe 24 zugeordnet ist. Die Teilgetriebe 22, 24 sind als Stirnradgetriebe in Vorgelegebauweise ausgeführt.

Der Antriebsstrang 10 kann für den Längseinbau in einem Fahrzeug oder für den Quereinbau in einem Fahrzeug ausgelegt sein.

Ferner sind in Fig. 1 schematisch dargestellt eine Motordrehzahl n_{M} des Antriebsmotors 12 sowie eine erste Getriebeeingangsdrehzahl n_{E1} des ersten Teilgetriebes (d.h. = Drehzahl der Hohlwelle 23), und eine zweite Getriebeeingangsdrehzahl n_{E2} (d.h. die Drehzahl der Innenwelle 25). Bei n_{A} ist eine Drehzahl des Getriebeausgangs 32 gezeigt.

In Fig. 1 ist ferner dargestellt, dass die Motorsteuereinrichtung 28 steuernd auf den Antriebsmotor 12 einwirkt und die Motordrehzahl n_{M} als Eingangssignal empfängt. Ferner ist in Fig. 1 gezeigt, dass die Getriebesteuereinrichtung 30 steuernd auf die zwei Reibkupplungen 18, 20 und auf Schaltkupplungen zum Ein- und Auslegen der Gangstufen einwirkt. Die Getriebesteuereinrichtung 30 steuert folglich auch die Reibkupplungsanordnung 14. Die Getriebesteuereinrichtung 30 empfängt ferner die Drehzahlen n_{E1}, n_{E2} der Getriebeeingangswellen 23, 25 sowie die Drehzahl n_{A} des Getriebeausgangs 32.

Die Getriebedrehzahlen können entweder direkt durch Sensoren gemessen werden oder durch Berechnung erhalten werden, beispielsweise unter Verwendung der Raddrehzahlen der angetriebenen Räder und unter Berücksichtigung der eingerichteten Übersetzungen.

Fig. 2 zeigt in schematischer Form einen beispielhaften Verlauf eines Drehzahlparameters n (oder dessen Gradienten n') über der Zeit. Der Drehzahlparameter ist in Fig. 2 auch mit 40 bezeichnet. Vorliegend wird ohne Einschränkung an Allgemeingültigkeit angenommen, dass es sich bei dem Drehzahlparameter n um die Motordrehzahl n_{M}, um eine der Getriebeeingangsdrehzahlen n_{E1}, n_{E2} oder um deren Differenzdrehzahl Δn_{E} handelt. Nachstehend wird zur Vereinfachung nur auf die Motordrehzahl n_{M} Bezug genommen.

In Fig. 2 ist bei n₁ ein erster Schwellenwert eingetragen, sowie ein zweiter Schwellenwert n₂, der größer ist als der erste Schwellenwert n₁.

In dem in Fig. 2 gezeigten Beispiel steigt die Motordrehzahl n_{M} mit der Zeit bis zu einem Zeitpunkt t₁ an. Zum Zeitpunkt t₁ überschreitet die Motordrehzahl n_{M} den ersten Schwellenwert n₁, fällt jedoch relativ kurz danach (bei t₂) wieder unter den Schwellenwert n₁ ab. Der Zeitraum zwischen t₁ und t₂ ist so kurz, dass dies von dem erfindungsgemäßen Verfahren als nicht problematisch erkannt wird, so dass keine weitergehenden Maßnahmen eingeleitet werden. Zum Zeitpunkt t₃ steigt die Motordrehzahl n_{M} wieder über den ersten Schwellenwert n₁ an. In diesem Fall verbleibt die Motordrehzahl n_{M} für einen Zeitraum Δt₁ über dem ersten Schwellenwert n₁. Dies wird von dem erfindungsgemäßen Verfahren als Fehlersituation erkannt, so dass zum Zeitpunkt t₄ (nach Ablauf der ersten vorbestimmten Zeitspanne Δt₁) ein Fehlerflag F gesetzt wird. Mit dem Setzen des Fehlerflags F leitet die Steuereinrichtung 26 Maßnahmen zum Absenken der Motordrehzahl n_{M} ein, so dass die Motordrehzahl n_{M} bald hiernach wieder unter den ersten Schwellenwert n₁ abfällt. Die von der Steuereinrichtung 26 eingeleiteten Maßnahmen können in einer einzelnen Maßnahme bestehen, (.B. Absenken des Motordrehmomentes), oder in einer Kombination mehrerer Maßnahmen, wie sie eingangs ausführlich erläutert worden sind.

In einem zweiten in Fig. 2 gezeigten Beispiel steigt die Motordrehzahl n_{M} zu einem Zeitpunkt t₅ wieder über den ersten Schwellenwert n₁ an. Zum Zeitpunkt t₆, d.h. nach Ablauf der ersten vorbestimmten Zeitspanne Δt₁ werden von der Steuereinrichtung 26 wiederum Maßnahmen zur Drehzahlabsenkung eingeleitet (das Flag F wird gesetzt). Die eingeleiteten Maßnahmen bringen in diesem zweiten Beispiel jedoch nicht den gewünschten Erfolgt, so dass die Motordrehzahl n_{M} zum Zeitpunkt t₇ den zweiten Schwellenwert n₂ überschreitet. In diesem Fall wird überwacht, ob die Motordrehzahl n_{M} für eine zweite vorbestimmte Zeitspanne Δt₂ oberhalb des zweiten Schwellenwertes verbleibt, was im vorliegenden Beispiel der Fall ist. Demzufolge wird zum Zeitpunkt t₈ ein Resetflag R gesetzt, das ein unmittelbares Zurücksetzen zumindest der Steuereinrichtung 30, ggf. der gesamten Steuereinrichtung 26 mit sich bringt. Bei dem Reset werden die Reibkupplungen 18, 16 sofort geöffnet, da aufgrund des Zurücksetzens der Getriebesteuereinrichtung 30 die entsprechenden Aktuatoren zum Schließen der Reibkupplungen 18, 20 stromlos geschaltet werden und die Reibkupplungen 18, 20 selbstöffnend ausgebildet sind. Ferner wird durch ein Rücksetzen der Motorsteuereinrichtung 28 die Kraftstoffzufuhr zu dem Antriebsmotor 12 unterbunden, so dass dessen Drehmoment abfällt. In Summe ergibt sich eine Situation, dass die Motordrehzahl n_{M} abfällt und zum Zeitpunkt t₉ den ersten Schwellenwert n₁ wieder unterschreitet.

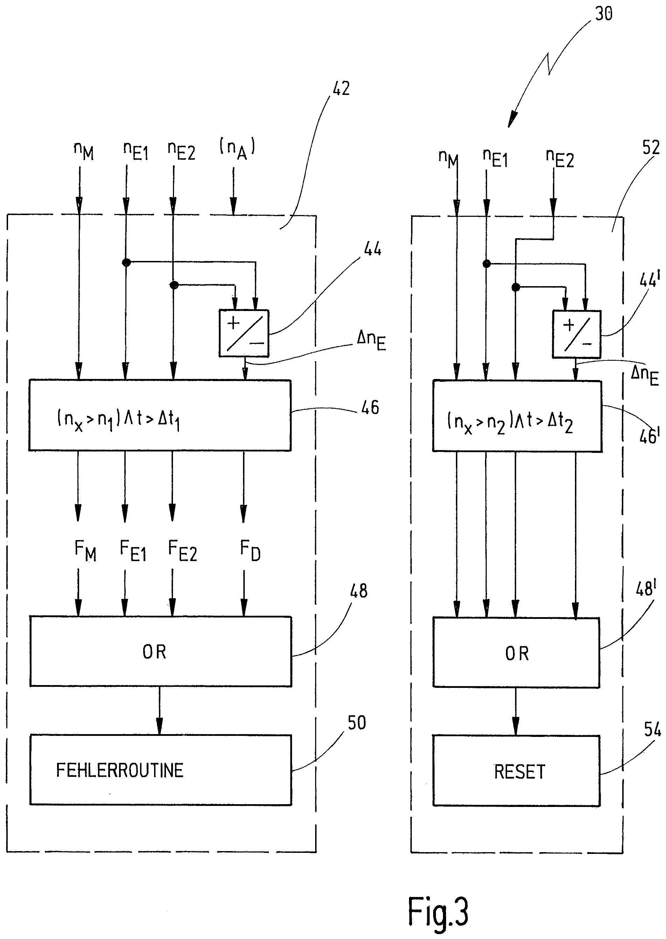

In Fig. 3 ist in schematischer Form ein erster Prozess 42 dargestellt, der in der Getriebesteuereinrichtung 30 implementiert ist. Der erste Prozess 42 empfängt als Eingangssignale die Motordrehzahl n_{M} sowie die Getriebeeingangsdrehzahlen n_{E1}, n_{E2} sowie ggf. die Ausgangsdrehzahl n_{A}.

In einem Additions/Subtraktionsmodul 44 werden die Getriebeeingangsdrehzahlen entweder additiv oder subtraktiv miteinander verknüpft, je nachdem, ob in beiden Teilgetrieben 22, 24 eine Vorwärtsgangstufe gewählt wird (in diesem Fall werden die Getriebeeingangsdrehzahlen voneinander subtrahiert), oder ob in einem Teilgetriebe eine Rückwärtsgangstufe und in dem anderen Teilgetriebe eine Vorwärtsgangstufe eingelegt wird (in diesem Fall werden die Getriebeeingangsdrehzahlen addiert).

In einem Überprüfungsmodul 46 findet eine Überprüfung statt, ob ein jeweiliger Drehzahlparameter n_{X} größer ist als ein erster Schwellenwert n₁. Ferner findet eine Überprüfung statt, ob diese Bedingung für einen Zeitraum größer als Δt₁ erfüllt ist.

Dieses Überprüfungsmodul 46 überprüft die Bedingung für jeden der Drehzahlparameter n_{M}, n_{E1}, n_{E2} sowie für den Ausgang des Additions/Subtraktionsmoduls 44, der mit Δn_{E} bezeichnet ist. Die Schwellenwerte n₁ können für jeden der Drehzahlparameter unterschiedlich sein. Gleiches gilt für die erste vorbestimmte Zeitspanne Δt₁. Sofern die obigen Bedingungen in dem Überprüfungsmodul 46 erfüllt sind, gibt das Überprüfungsmodul 46 für den jeweiligen Drehzahlparameter ein Fehlerflag F_{M}, F_{E1}, F_{E2} und/oder F_{D} aus.

Diese Fehlerflags werden in einem Verknüpfungsmodul 48 durch eine Oderverknüpfung miteinander verknüpft. Wenn nur eines der Fehlerflags F_{M}, F_{E1}, F_{E2}, F_{D} gesetzt wird, wird eine Fehlerroutine 50 eingeleitet. Diese leitet dann weitergehende Maßnahmen ein, die davon abhängen können, welches der Fehlerflags gesetzt ist.

Der Prozess 42 ist in der Steuereinrichtung 30 als Softwareprozess implementiert, und zwar auf einem hohen Level, der nicht bis ins letzte Detail auf Fehler hin überprüft worden ist.

Da Überdrehzahlen zu sicherheitskritischen Zuständen führen können, wird in der Getriebesteuereinrichtung 30 ein zweiter Prozess 52 implementiert, der ebenfalls in Fig. 3 dargestellt ist.

Der zweite Prozess 52 ist ein bis ins Detail geprüfter Prozess auf einer anderen (tieferen) Softwareebene als der erste Prozess 42. Der zweite Prozess 52 kann dabei ähnliche oder identische Funktionen aufweisen wie der erste Prozess 42. Dies ist im vorliegenden Fall dadurch dargestellt, dass der zweite Prozess 52 im Wesentlichen die gleichen Drehzahlparameter empfängt. In entsprechender Weise weist der zweite Prozess 52 ein Additions/Subtraktionsmodul 44', ein Überprüfungsmodul 46' und ein Verknüpfungsmodul 48' auf. In dem Überprüfungsmodul 46' erfolgt eine Abfrage des jeweiligen Drehzahlparameters n_{X} daraufhin, ob dieser einen zweiten Schwellenwert n₂ für eine zweite vorbestimmte Zeitspanne Δt₂ überschreitet. Vorzugsweise ist der zweite Schwellenwert n₂ größer als der erste Schwellenwert n₁. Ferner ist es bevorzugt, wenn die zweite vorbestimmte Zeitspanne Δt₂ kleiner bzw. kürzer ist als die erste vorbestimmte Zeitspanne Δt₁.

Der zweite Prozess 52 ist ein sicherheitsrelevanter Prozess und anstelle einer Fehlerroutine 50 ist der Ausgang des Verknüpfungsmoduls 48' mit einer Resetroutine 54 verbunden, mittels der die Getriebesteuereinrichtung 30 zurückgesetzt wird, so dass die Reibkupplungen 18, 20 sofort geöffnet werden.

Die oben genannten Schwellenwerte n₁, n₂ sind, wie erwähnt, drehzahlparameterspezifische Werte und sind ferner Werte, die von dem jeweiligen Antriebsstrang abhängen (beispielsweise kann bei einem Antriebsmotor 12 in Form eines Dieselmotors die erste Drehzahlschwelle n₁ deutlich kleiner sein als bei einem Antriebsmotor 12, der für Benzinbetrieb ausgerichtet ist oder als Sportmotor ausgelegt ist.

Die vorbestimmten Zeitspannen Δt₁, Δt₂ sind in jedem Fall größer als 0, vorzugweise jedoch länger als 50 ms, insbesondere länger als 100 ms.

## Patentansprüche

1. Verfahren zum Überwachen eines automatisierten Antriebsstranges (10) eines Kraftfahrzeuges, der einen Antriebsmotor (12), eine Reibkupplungsanordnung (14) und ein Stufengetriebe (16) aufweist, wobei die Reibkupplungsanordnung (14) den Antriebsmotor (12) mit dem Stufengetriebe (16) verbindet oder hiervon trennt, mit den Schritten:
- Erfassen wenigstens eines Drehzahlparameters (40) des Antriebsstranges (10);
- Überprüfen (46), ob der Drehzahlparameter (40) für eine erste vorbestimmte Zeitspanne (Δt₁) größer ist als ein erster Schwellenwert (n₁); und
- Einleiten (50) einer Maßnahme in dem Antriebsstrang (10), um den Drehzahlparameter (40) abzusenken, wenn der Drehzahlparameter (40) für die erste vorbestimmte Zeitspanne (Δt₁) größer ist als der erste Schwellenwert (n₁),
**dadurch gekennzeichnet, dass** das Kraftfahrzeug ein Personenkraftfahrzeug ist, wobei das Stufengetriebe (16) ein Doppelkupplungsgetriebe mit einem ersten und einem zweiten Teilgetriebe (22, 24) ist, von denen eines aktiv und das andere inaktiv ist, und wobei die Maßnahme in dem inaktiven Teilgetriebe durchgeführt wird.

2. Verfahren nach Anspruch 1, wobei der Drehzahlparameter (40) eine Motordrehzahl (n_{M}) des Antriebsmotors (12) oder ein Gradient hiervon ist.

3. Verfahren nach Anspruch 2, wobei der Drehzahlparameter (40) eine Getriebeeingangsdrehzahl (n_{E1}, n_{E2}) des Stufengetriebes (16) oder ein Gradient hiervon ist.

4. Verfahren nach Anspruch 2, wobei der Antriebsstrang (10) ein Wellenanordnung aus einer Hohlwelle (23) und einer konzentrisch darin gelagerten Innenwelle (25) aufweist, wobei der Drehzahlparameter (40) eine Differenzdrehzahl (Δn_{E}) zwischen der Hohlwelle (23) und der Innenwelle (25) oder ein Gradient hiervon ist.

5. Verfahren nach einem der Ansprüche 1 - 4, wobei wenigstens zwei unterschiedliche Drehzahlparameter (n_{M}, n_{E1}, n_{E2}, Δn_{E}) des Antriebsstranges (10) überprüft werden, wobei eine den jeweiligen Drehzahlparameter absenkende Maßnahme eingeleitet wird, wenn wenigstens einer der zwei Drehzahlparameter für einen jeweiligen ersten Zeitraum einen jeweiligen ersten Schwellenwert überschreitet.

6. Verfahren nach einem der Ansprüche 1 - 5, wobei die Maßnahme beinhaltet, das von dem Antriebsmotor (12) abgegebene Drehmoment abzusenken.

7. Verfahren nach einem der Ansprüche 1 - 6, wobei die Maßnahme beinhaltet, eine Reibkupplung (18, 20) der Reibkupplungsanordnung (14) zu öffnen.

8. Verfahren nach einem der Ansprüche 1 - 7, wobei die Maßnahme beinhaltet, in dem Stufengetriebe (16) eine andere Gangstufe einzulegen.

9. Verfahren nach einem der Ansprüche 1 - 7, wobei die Maßnahme beinhaltet, das Stufengetriebe (16) auf Neutral zu schalten.

10. Verfahren nach einem der Ansprüche 1 - 9, wobei die Maßnahme beinhaltet, in dem aktiven Teilgetriebe eine Gangstufe auszulegen, und wobei das aktive Teilgetriebe vor diesem Schritt entlastet wird.

11. Verfahren nach einem der Ansprüche 1 - 10, wobei die Maßnahme beinhaltet, das Kraftfahrzeug abzubremsen.

12. Verfahren nach einem der Ansprüche 1 - 11, wobei das Verfahren in einem ersten Prozess (42) in einer elektronischen Steuereinrichtung (30) durchgeführt wird und wobei in einem parallelen zweiten Prozess (52) wenigstens ein Drehzahlparameter (40) des Antriebsstranges (10) überprüft wird, ob der Drehzahlparameter (40) für eine zweite vorbestimmte Zeitspanne (Δt₂) größer ist als ein zweiter Schwellenwert (n₂), der größer ist als der erste Schwellenwert (n₁), und, wenn dies der Fall ist, die Steuereinrichtung (30) zurückgesetzt wird, um einen sicherheitsunkritischen Zustand des Antriebsstranges (10) hervorzurufen.

13. Antriebsstrang (10) eines Personenkraftfahrzeugs, der einen Antriebsmotor (12), wenigstens eine Reibkupplungsanordnung (14), ein Doppelkupplungsgetriebe (16) mit einem ersten und einem zweiten Teilgetriebe, von denen eines aktiv und das andere inaktiv ist, und eine Steuereinrichtung (26, 30) zur Steuerung des Antriebsstranges (10) aufweist, wobei die Reibkupplungsanordnung (14) den Antriebsmotor (12) mit dem Doppelkupplungsgetriebe (16) verbindet oder hiervon trennt und wobei in der Steuereinrichtung (26, 30) ein Verfahren gemäß einem der Ansprüche 1 - 12 implementiert ist.

## Claims

1. Method for monitoring an automated drive train (10) of a motor vehicle, which drive train comprises a drive engine (12), a friction clutch arrangement (14) and a multi-speed transmission (16), the friction clutch arrangement (14) connecting or disconnecting the drive engine (12) to/from the multi-speed transmission (16), comprising the steps:
- determining at least one rotational speed parameter (40) of the drive train (10);
- checking (46) whether the rotational speed parameter (40) is greater than a first threshold value (n₁) for a first predetermined time interval (Δt₁), and
- initiating (50) a measure in the drive train (10) in order to lower the rotational speed parameter (40) if the rotational speed parameter (40) is greater than the first threshold value (n₁) for the first predetermined time interval (Δt₁),
**characterized in that** the motor vehicle is a passenger car, wherein the multi-speed transmission (16) is a dual clutch transmission with a first and a second partial transmission (22, 24), one of which is active and the other inactive, and wherein the measure is carried out in the inactive partial transmission.

2. Method according to Claim 1, wherein the rotational speed parameter (40) is an engine speed (n_{M}) of the drive engine (12) or a gradient thereof.

3. Method according to Claim 2, wherein the rotational speed parameter (40) is a transmission input speed (n_{E1}, n_{E2}) of the multi-speed transmission (16) or a gradient thereof.

4. Method according to Claim 2, wherein the drive train (10) has a shaft arrangement consisting of a hollow shaft (23) and an inner shaft (25) mounted concentrically therein, wherein the rotational speed parameter (40) is a speed differential (Δn_{E}) between the hollow shaft (23) and the inner shaft (25) or a gradient thereof.

5. Method according to any one of Claims 1 to 4, wherein at least two different rotational speed parameters (n_{M}, n_{E1}, n_{E2}, Δn_{E}) of the drive train (10) are checked, a measure for lowering one of the respective rotational speed parameters being initiated if at least one of the two rotational speed parameters exceeds a respective first threshold value for a respective first time period.

6. Method according to any one of Claims 1 to 5, wherein the measure comprises lowering the torque delivered by the drive engine (12).

7. Method according to any one of Claims 1 to 6, wherein the measure comprises disengaging a friction clutch (18, 20) of the friction clutch arrangement (14).

8. Method according to any one of Claims 1 to 7, wherein the measure comprises engaging a different gear in the multi-speed transmission (16).

9. Method according to any one of Claims 1 to 7, wherein the measure comprises shifting the multi-speed transmission (16) to neutral.

10. Method according to any of Claims 1 to 9, wherein the measure comprises disengaging a gear in the active partial transmission, and wherein the active partial transmission is unloaded prior to this step.

11. Method according to any one of Claims 1 to 10, wherein the measure comprises braking the motor vehicle.

12. Method according to any one of Claims 1 to 11, wherein the method is carried out in a first process (42) in an electronic control device (30), and wherein in a parallel second process (52) at least one rotational speed parameter (40) of the drive train (10) is checked as to whether the rotational speed parameter (40) for a second predetermined time interval (Δt₂) is greater than a second threshold value (n₂) which is greater than the first threshold value (n₁) and, if this is the case, the control device (30) is reset in order to bring about a non-safety critical state of the drive train (10).

13. Drive train (10) of a passenger car, which drive train comprises a drive engine (12), at least one friction clutch arrangement (14), a dual clutch transmission (16) with a first and a second partial transmission, one of which is active and the other inactive, and a control device (26, 30) for controlling the drive train (10), wherein the friction clutch arrangement (14) connects or disconnects the drive engine (12) to/from the dual clutch transmission (16), and wherein a method according to any one of Claims 1 to 12 is implemented in the control device (26, 30).

## Revendications

1. Procédé de surveillance d'un groupe motopropulseur automatisé (10) d'un véhicule automobile, comportant un moteur d'entraînement (12), un système d'embrayage à friction (14) et une transmission à rapports étagés (16), dans lequel le système d'embrayage à friction (14) relie le moteur d'entraînement (12) à la transmission à rapports étagés (16) ou l'en sépare, comportant les étapes consistant à :
- détecter au moins un paramètre de vitesse de rotation (40) du groupe motopropulseur (10) ;
- vérifier (46) si le paramètre de vitesse de rotation (40) est supérieur à une première valeur de seuil (n₁) pendant une première période de temps prédéterminée (Δt₁) ; et
- mettre en oeuvre (50) une action dans le groupe motopropulseur (10) afin de réduire le paramètre de vitesse de rotation (40) lorsque le paramètre de vitesse de rotation (40) est supérieur à la première valeur de seuil (n₁) pendant la première période de temps prédéterminée (Δt₁),
**caractérisé en ce que** le véhicule automobile est un véhicule automobile de tourisme, dans lequel la transmission à rapports étagés (16) est une boîte de vitesse à double embrayage ayant des première et seconde transmissions partielles (22, 24), dont l'une est active et l'autre est inactive, et dans lequel l'action est effectuée dans la transmission partielle inactive.

2. Procédé selon la revendication 1, dans lequel le paramètre de vitesse de rotation (40) est une vitesse de rotation de moteur (n_{M}) du moteur d'entraînement (12) ou un gradient de celle-ci.

3. Procédé selon la revendication 2, dans lequel le paramètre de vitesse de rotation (40) est une vitesse d'entrée de transmission (n_{E1}, n_{E2}) de la transmission à rapports étagés (16) ou un gradient de celle-ci.

4. Procédé selon la revendication 2, dans lequel le groupe motopropulseur (10) comporte un système d'arbres constitué d'un arbre creux (23) et d'un arbre interne (25) monté dans celui-ci de manière concentrique, dans lequel le paramètre de vitesse de rotation (40) est une vitesse de rotation différentielle (Δn_{E}) entre l'arbre creux (23) et l'arbre interne (25) ou un gradient de celle-ci.

5. Procédé selon l'une quelconque des revendications 1-4, dans lequel au moins deux paramètres de vitesse de rotation différents (n_{M}, n_{E1}, n_{E2}, Δn_{E}) du groupe motopropulseur (10) sont vérifiés, dans lequel une action réduisant le paramètre de vitesse de rotation respectif est mise en oeuvre lorsqu'au moins l'un des deux paramètres de vitesse de rotation dépasse une première valeur de seuil respective pendant un premier intervalle de temps respectif.

6. Procédé selon l'une quelconque des revendications 1-5, dans lequel l'action consiste à réduire le couple de rotation délivré par le moteur d'entraînement (12).

7. Procédé selon l'une quelconque des revendications 1-6, dans lequel l'action consiste à ouvrir un embrayage à friction (18, 20) du système d'embrayage à friction (14).

8. Procédé selon l'une quelconque des revendications 1-7, dans lequel l'action consiste à engager un autre rapport de vitesse dans la transmission à rapports étagés (16).

9. Procédé selon l'une quelconque des revendications 1-7, dans lequel l'action consiste à faire passer la transmission à rapports étagés (16) au point mort.

10. Procédé selon l'une quelconque des revendications 1-9, dans lequel l'action consiste à effectuer un changement de rapport dans la transmission partielle active et dans lequel la transmission partielle active est libérée avant ladite étape.

11. Procédé selon l'une quelconque des revendications 1-10, dans lequel l'action consiste à freiner le véhicule automobile.

12. Procédé selon l'une quelconque des revendications 1-11, dans lequel le procédé est mis en oeuvre lors d'un premier processus (42) dans un dispositif de commande électronique (30) et dans lequel, lors d'un second processus parallèle (52), au moins un paramètre de vitesse de rotation (40) du groupe motopropulseur (10) est vérifié pour déterminer si le paramètre de vitesse de rotation (40), pendant une seconde période de temps prédéterminée (Δt₂), est supérieur à une seconde valeur de seuil (n₂) qui est supérieure à la première valeur de seuil (n₁) et lorsque cela est le cas, le dispositif de commande (30) est réinitialisé pour faire passer le groupe motopropulseur (10) dans un état de sécurité non critique.

13. Groupe motopropulseur automatisé (10) d'un véhicule automobile de tourisme, comportant un moteur d'entraînement (12), au moins un système d'embrayage à friction (14), une transmission à double embrayage (16) comportant des première et seconde transmissions partielles, dont l'une est active et l'autre est inactive, et un dispositif de commande (26, 30) destiné à commander le groupe motopropulseur (10), dans lequel le système d'embrayage à friction (14) relie le moteur d'entraînement (12) à la transmission à double embrayage (16) ou l'en sépare, et dans lequel un procédé selon l'une quelconque des revendications 1-12 est mis en oeuvre dans le dispositif de commande (26, 30).
